# EUROPÄISCHE PATENTSCHRIFT

(11) **EP 2 172 109 B1**
(45) Veröffentlichungstag und Bekanntmachung des Hinweises auf die Patenterteilung: **10.08.2016**
(21) Anmeldenummer: 09150542.0
(22) Anmeldetag: 14.01.2009
(51) Int. Cl.: A21C 11/10, A21C 9/08

(54) **Verfahren zur Erzeugung von Zuschnitten von Teigstücken mit einer, zumindest im Wesentlichen, dreieckigen und gleichschenkligen Grundform aus einem Teigband sowie zugehörige Vorrichtung**
Method for creating dough blanks with an at least mainly triangular and equal-sided basic shape from a dough strip and corresponding device
Procédé de production de morceaux de pâte pourvus d'une forme au moins essentiellement triangulaire et isocèle à partir d'une bande de pâte et dispositif correspondant

(30) Priorität: 02.10.2008 EP 08165773
(43) Veröffentlichungstag der Anmeldung: 07.04.2010
(73) Patentinhaber: Fritsch GmbH, 97348 Markt Einersheim (DE)
(72) Erfinder: Bernhardt, Udo, 97346 Iphofen (DE); Dorsch, Mirko, 97355 Kleinlangheim (DE)
(74) Vertreter: Götz, Georg Alois

(56) Entgegenhaltungen:
- EP-A1- 0 382 105
- EP-A1- 0 482 917
- BE-A1- 902 440

## Beschreibung

Die Erfindung betrifft ein Verfahren zur Erzeugung von Zuschnitten von Teigstücken mit einer, zumindest im Wesentlichen, dreieckigen und gleichschenkligen Grundform aus einem Teigband sowie eine zugehörige Vorrichtung.

Bei der Herstellung von Gebäckstücken bzw. Teigprodukten ist es oft erforderlich, aus einem flachen (längeren oder endlosen) Teigband kleinere Teigstücke mit einer bestimmten Grundform auszuschneiden, die dann weiter verarbeitet werden. Beispielsweise werden im Rahmen der Croissantherstellung bzw. zur Herstellung ähnlicher Gebäckstücke im Wesentlichen dreieckige Teigzuschnitte erzeugt, die dann bei der sich anschließenden Weiterverarbeitung geeignet positioniert und aufgewickelt werden, um so letztlich das fertige Gebäckstück zu erhalten. Je nach Art des gewünschten Gebäckstücks kann die Weiterverarbeitung dabei unterschiedlich vorgenommen werden, es muss also nicht zwangsläufig ein Aufwickeln oder Aufrollen erfolgen.

Dabei wird durch die Art und Weise, in der Zuschnitte erzeugt werden, die Grundlage für die weitere Verarbeitung gelegt, insbesondere für nachfolgende Positionierungsvorgänge, die nötig sind, um die Gebäckstücke unter Einhaltung der Qualitätsvorgaben aufwickeln, einrollen bzw. falten oder anderswie weiterverarbeiten zu können.

Dabei ist es bei bisherigen Zuschnittverfahren, sofern bei diesen mehrere nebeneinander liegende Teigstücke über die Breite eines Teigbands betrachtet ausgeschnitten werden, üblich, dass die Teigstücke so zugeschnitten werden, dass alle Zuschnitte entlang der Querrichtung des Teigbands gleichsinnig ausgerichtet sind. Eine solche Anordnung ist beispielsweise der EP 0 382 105 A1 zu entnehmen, bei der die nebeneinander liegenden Teigstücke aus der Teigbahn so ausgeschnitten werden, dass die Basisseiten eines Dreiecks jeweils in einer Reihe, betrachtet über die Breite des Teigbands, alle nach links und in der folgenden Reihe alle nach rechts zeigen usw. Die dann für die korrekte Positionierung der Teigzuschnitte zur Weiterverarbeitung notwendigen Schritte, also beispielsweise Spreizvorgänge, ein Drehen der Zuschnitte und ein nachfolgendes Ablegen, damit schließlich ein Aufwickeln beispielsweise zu einem Croissant möglich ist, erfordern jedoch im Hinblick auf die Maschinen bzw. die Werkzeuge, die die Positionierungsarbeiten erledigen, längere Positionierungswege und größere Maschinenbewegungen. Der Platzbedarf ist beträchtlich und es sind größere Leerhubstrecken in Kauf zu nehmen.

Bei anderen Verfahren ist es üblich, dass ein zunächst breiteres Teigband vor dem eigentlichen Ausstanzen der Teigstücke bereits in eine Mehrzahl von Längsbändern aufgetrennt wird, die in einem gewissen Abstand angeordnet werden. Dies führt jedoch ebenfalls zu einem sehr hohen Platzbedarf und bringt das Problem mit sich, dass die einzelnen Teigbahnen beim Spreizen leicht verschoben werden können, so dass es dann beim Ausstanzen bzw. Ausschneiden durch den starren Abstand der Stanzwerkzeuge zu Fehlern kommt. Die Genauigkeit beim eigentlichen Zuschnittprozess ist somit verringert.

Der Erfindung liegt damit die Aufgabe zugrunde, ein diesbezüglich verbessertes Verfahren und eine entsprechend verbesserte Vorrichtung anzugeben.

Zur Lösung dieser Aufgabe ist ein Verfahren zur Erzeugung von Zuschnitten von Teigstücken mit einer, zumindest im Wesentlichen, dreieckigen und gleichschenkligen Grundform aus einem Teigband vorgesehen, das sich dadurch auszeichnet, dass über die Breite des Teigbands Teigstücke mit der Grundform in mehreren längsgerichteten Reihen und mit Basisseiten, die, bezüglich der mehreren Reihen von Teigstücken, symmetrisch und jeweils parallel zu der sich in Längsrichtung des Teigbands erstreckenden Teigbandmittelachse verlaufen, zugeschnitten werden.

Der Zuschnitt erfolgt also aus einem Teigband mit einer Gesamtbreite, die zum Zuschneiden mehrerer nebeneinander liegender Teigstücke der gewünschten Art geeignet ist, wobei aber nun die Teigstücke so zugeschnitten werden, dass die über die Breite des Teigbands nebeneinander liegenden Dreiecksformen, die jeweils unterschiedlichen Längsreihen zugeordnet sind, nicht alle gleich ausgerichtet sind, sondern so, dass diese Teigstücke eine symmetrische Ausrichtung bezüglich der Teigbandlängsachse als Symmetrieachse zeigen. Dies bedeutet, dass beispielsweise bei insgesamt vier in der Breite des Teigbands nebeneinander liegenden Teigstücken, also somit vier Längsreihen von Teigstücken, die Basisseiten der beiden Teigstücke, die bezüglich einer Förderrichtung des Teigbands links von der Längsachse ausgeschnitten werden, beispielsweise nach links außen zeigen, so dass dann die Basisseiten der beiden Teigstücke, die rechts der Längsachse ausgeschnitten werden, in die andere Richtung, also nach rechts außen zeigen. Dabei verlaufen die Basisseiten der Teigstücke jeweils parallel zur Längsachse bzw. Mittelachse des Teigbands. Dementsprechend bezieht sich die erfindungsgemäße Symmetrie des Ausstanzens bzw. Ausschneidens der Teigstücke auf die Anordnung der Teigstücke links und rechts der Mittelachse. Die Teigstücke sind also nicht mehr über die ganze Querrichtung des Teigbands in einer Richtung ausgerichtet. Dennoch erfolgt der Zuschnitt direkt aus einem breiteren Teigband, aus dem mehrere nebeneinander liegende Teigstücke, also mehrere Längsreihen von Teigstücken, ausgeschnitten werden können.

Diese Art des Zuschnitts birgt für sich möglicherweise anschließende Positionierungsvorgänge eine Reihe von Vorteilen in sich, da durch dieses Zuschnittverfahren eine anschließende Positionierung der Teigstücke mit wesentlichen kürzeren Wegen bzw. Verfahrwegen der entsprechenden Werkzeuge und Maschinen möglich wird, insbesondere, da die Dreiecke über die Breite des Teigbands nicht mehr mühsam aus einer störenden Verzahnung gelöst werden müssen. Dennoch wird trotzdem direkt aus dem breiten Teigband ausgeschnitten, so dass die Genauigkeit des Zuschnitts im Vergleich zu Verfahren, bei denen vorab eine Vereinzelung auf einzelne Bänder, die jeweils nur die Breite eines Teigstücks aufweisen, vorgenommen wird, höher ist.

Das Ausstanzen der Dreiecke bzw. deren Zuschnitt erfolgt dabei zweckmäßigerweise so, dass das Teigband mittels Förderbandeinrichtungen in Richtung seiner Längsachse, die dementsprechend der Lauf- bzw. Förderrichtung entspricht, weiterbewegt wird. Die Form der Zuschnitte ist nicht zwangsläufig exakt ein Dreieck. Es können auch Zuschnitte zum Beispiel mit abgeflachten Spitzen erzeugt werden. Neben Zuschnitten, die exakt oder näherungsweise die Form eines gleichseitigen Dreiecks haben, sind auch Zuschnitte möglich, bei denen die Basisseite kleiner ist als die Höhe des Dreiecks (und damit auch eine etwas oder deutlich geringere Länge hat als die beiden Schenkel).

Erfindungsgemäß können die Teigstücke im Rahmen des Verfahrens nach dem Zuschnitt zur Weiterverarbeitung geeignet positioniert werden. In diesem Fall wird somit erfindungsgemäß ein Zuschnitt- und Positionierungsverfahren durchgeführt, wobei im Rahmen der Positionierung zum Beispiel Spreizvorgänge und Drehvorgänge an den einmal ausgeschnittenen Teigstücken vorgenommen werden können. Ziel ist es dabei, die Teigstücke geeignet so anzuordnen, dass problemlos beispielsweise ein Aufrollen oder Aufwickeln usw. erfolgen können.

Im Rahmen der Positionierung können die Teigstücke quer und/oder schräg zur Längsrichtung des Teigbands gespreizt und/oder in eine gewünschte Richtung gedreht und/oder in Längsrichtung des Teigbands gespreizt werden, insbesondere in einer Reihenfolge, bei der die Querspreizung zuerst erfolgt. Der Winkel bezüglich der Längsrichtung des Teigbands, mit dem die Querspreizung erfolgt, ist zweckmäßigerweise abhängig von dem Winkel, den jeweils ein Schenkel eines dreieckigen Teigstücks und die Basisseite einschließen. Damit die Querverschiebung sinnvoll möglich ist, muss der Winkel der Verschiebung kleiner oder gleich dem zwischen dem Schenkel und der Basisseite eingeschlossenem Winkel sein.

Die Positionierung kann also so erfolgen, dass zunächst ein Spreizen in Querrichtung bzw. schräg zur Längsrichtung des Teigbandes, vorzugsweise diagonal von der Teigbandmittelachse weg, erfolgt. Anschließend können die einzelnen Teigstücke in eine gewünschte Position gedreht werden bzw. es kann eine Spreizung in Längsrichtung des Teigbands durchgeführt werden. Gegebenenfalls ist, damit eine Drehung möglich ist, vorab eine Längsspreizung vorzunehmen. Es ist auch möglich, mehrere Spreiz- bzw. Drehvorgänge an den Teigstücken vorzunehmen. Die Positionierung wird in jedem Fall in einzelne Schritte aufgetrennt, nämlich in die Schritte Querspreizen, Drehen und Längsspreizen, die zweckmäßigerweise zur optimalen Positionierung alle und in einer geeigneten Reihenfolge durchgeführt werden. Dabei ermöglicht die beschriebene geschickte Anordnung der Dreiecksbasen insbesondere die vorteilhafte schräge bzw. diagonale Spreizung bezüglich des Teigbands, durch die die für die Positionierung erforderlichen Wege kurz gehalten werden können. Um ein Drehen der Dreiecke in eine gewünschte Position zu ermöglichen, ist der Betrag der Längsspreizung in Abhängigkeit von der Höhe zur Basisseite des Dreiecks zu wählen. Ist das Dreieck also nicht gleichseitig, sondern weist zum Beispiel längere Schenkel (also einen Winkel zwischen Basis und Schenkel von mehr als 60°) und damit auch eine größere Höhe in Bezug auf die Basisseite auf, so ist der Längsspreizweg zu vergrößern, damit anschließend eine Drehung der Dreiecke möglich ist, ohne dass diese sich berühren. Einen Anhalt für die erforderliche Längsspreizung bietet auch ein Kreis für die gewünschte Drehbewegung, der die Ecken des Dreiecks einschließt. Die entsprechenden Kreise nebeneinander liegender Dreiecke sollten sich nicht überschneiden.

Die Teigstücke können im Rahmen der Positionierung jeweils auf wenigstens einer separaten Förderbandeinrichtung zunächst quer und/oder schräg zur Längsrichtung des Teigbands gespreizt, anschließend in eine gewünschte Position gedreht und/oder in Längsrichtung des Teigbands gespreizt werden. Es kommen also vorteilhafterweise für die einzelnen Positionierungsschritte jeweils unterschiedliche Förderbandeinrichtungen zum Einsatz, so dass zum Beispiel die Drehung auf einem anderen Förderband erfolgt als die Längsspreizung. Bei Bedarf können für einen einzigen Positionierungsschritt wie beispielsweise die Querspreizung wiederum mehrere Förderbandeinrichtungen vorgesehen sein. Die Übergabe der Teigstücke auf jeweils andere Förderbänder bzw. Förderbandeinrichtungen zwischen den einzelnen Positionierungsschritten ermöglicht im Hinblick auf die Abstände und Ausrichtung der Teigstücke die optimale Anordnung und Weiterleitung der Zuschnitte zur Weiterverarbeitung, beispielsweise zum Aufwickeln.

Erfindungsgemäß können die Teigstücke mittels einer Vorrichtung zugeschnitten werden, die als Stanz- und Querspreizvorrichtung, insbesondere mit Schneiden und/oder Pickern, wenigstens ein Teigstück wenigstens einer längsgerichteten Reihe nach dem Zuschnitt quer zur Längsrichtung des Teigbands von wenigstens einem Teigstück einer anderen längsgerichteten Reihe bezüglich der Teigbandmittelachse nach außen oder schräg nach außen weg zieht.

Die Stanz- und Querspreizvorrichtung dient also dazu, zunächst die Teigstücke zuzuschneiden, um sie dann auf einen geeigneten Abstand zu bringen, also ein Querspreizen, gegebenenfalls eine Diagonalverschiebung, bezüglich der Teigbandmittelachse durchzuführen. Dazu werden eine gewisse Anzahl von Teigstücken wenigstens einer Längsreihe seitlich von den Teigstücken einer daneben gelegenen Reihe, beispielsweise der sich in Richtung auf die Teigbandmittelachse anschließenden nächsten Reihe, weg bewegt bzw. schräg oder quer von diesen weg verschoben. Dadurch ist eine Positionierung der Teigstücke bei sehr kurzen Bewegungsvorgängen möglich, die es andererseits bei Bedarf erlaubt, die entsprechenden Vorrichtungen und Maschinen ohne Leistungseinbußen mit geringeren Geschwindigkeiten zu betreiben, so dass diese ruhiger laufen.

Insbesondere kann die Stanz- und Querspreizvorrichtung jeweils zwei Teigstücke einer längsgerichteten Reihe, die mit zwei Dreiecksschenkeln derart aneinander liegen, dass die Spitze des in Längsrichtung des Teigbands hinteren Dreiecks nach außen weist, oder eine Anzahl von Teigstücken, die ein ganzzahliges Vielfaches von zwei ist, nach außen oder schräg nach außen weg ziehen und/oder es können die Teigstücke einer längsgerichteten Reihe nach dem Wegziehen nach außen oder schräg nach außen in Längsrichtung des Teigbands wieder aneinander gelegt werden. Das Stanzen (Ausstechen) und/oder Positionieren der Dreiecke erfolgt vorteilhafterweise immer für zwei oder eine einem ganzzahligen Vielfachen von zwei entsprechende Anzahl von Dreiecken.

Der Schräg- bzw. Querspreizvorgang kann also so erfolgen, dass jeweils zwei Teigstücke einer sich in Längsrichtung des Teigbands erstreckenden äußeren Reihe, von denen die Basis des in Förderrichtung vorderen Dreiecks nach außen zeigt, zusammen nach schräg außen bewegt werden, ebenso um einen geringeren Betrag die zwei zugehörigen Dreiecke einer sich in Richtung auf die Mittelachse des Teigbands anschließenden längsgerichteten Reihe usw. Auf der anderen Seite der Mittelachse des Teigbands erfolgt das Wegziehen der zwei direkt aneinander liegenden Teigstücke in die entgegengesetzte Richtung ebenfalls nach außen usw.

Für eine weitere Positionierung können dann die nun zum Beispiel in Zweiergruppen angeordneten Dreiecke bzw. auf andere Art und Weise quer gespreizten Dreiecke wieder bezüglich der Längsrichtung des Teigbands aneinander gelegt werden, um gegebenenfalls eine geeignete Weiterverarbeitung bzw. weitere Positionierung zu ermöglichen.

Teigstücke einer längsgerichteten Reihe, also einer Reihe von Zuschnitten in Längsrichtung des Teigbands bzw. in Förderrichtung, können mittels einer Längsspreiz- und Drehvorrichtung, insbesondere mit Pickern, in Längsrichtung des Teigbands auseinander gezogen und mit ihrer jeweiligen Basisseite bezüglich der einer Förderrichtung des Teigbands entsprechenden Längsrichtung nach vorne gedreht werden, insbesondere derart, dass die Drehung begonnen wird, sobald die Teigstücke etwas in Längsrichtung auseinander gezogen sind und/oder beendet wird, bevor eine endgültige Position der Teigstücke in der Längsrichtung erreicht ist. Dabei erfolgt, je nach Lage der Teigstücke, zweckmäßigerweise zum Beispiel zuerst die Längsspreizung und dann die Drehung. Aus Zeitgründen ist es von Vorteil, wenn die Drehung der Längsspreizung überlagert ist. In diesem Fall beginnt die Drehbewegung, sobald die Schenkel der Teigstücke etwas beabstandet sind, und wird in der Regel abgeschlossen, bevor die jeweiligen Teigstücke in Laufrichtung endgültig positioniert sind. Gegebenenfalls können auch mehrere Drehungen bzw. mehrere Längsspreizungen durchgeführt werden.

Demgemäß findet eine Auftrennung der für den Zuschnitt und die Positionierung erforderlichen Schritte auf zwei Maschinen, nämlich einmal eine Stanz- und Querspreizmaschine, zum anderen eine Längsspreiz- und Drehvorrichtung statt, die einmal das Ausstanzen und Querspreizen bewirken, andererseits das Drehen und Längsspreizen.

Diese Auftrennung der Verfahrensschritte auf zwei Maschinen führt dazu, dass die Wege, die für die einzelnen Schritte, beispielsweise zur geeigneten Positionierung der Picker, erforderlich sind, sehr kurz gehalten werden können. Zusammen mit der spezifischen erfindungsgemäßen Anordnung der Dreiecke für den Zuschnitt bedeutet dies, dass entsprechende Rückhubeinrichtungen im Vergleich zu bisherigen Maschinen deutlich kürzere Wege zurücklegen müssen, so dass bei gleicher Hubzahl eine schnellere Verarbeitung bzw. ein Betrieb mit geringeren Geschwindigkeiten möglich wird.

Insbesondere können zwei Teigstücke einer Reihe, die mit zwei Dreiecksschenkeln derart aneinander liegen, dass die Spitze des in Längsrichtung des Teigbands hinteren Dreiecks nach außen weist, mittels einer Dreh- und Längsspreizvorrichtung in Längsrichtung des Teigbands auseinander gezogen und mit ihrer jeweiligen Basisseite nach vorne gedreht werden, insbesondere derart, dass die Drehung begonnen wird, sobald die Teigstücke etwas in Längsrichtung auseinander gezogen sind und/oder beendet wird, bevor eine endgültige Position der Teigstücke in der Längsrichtung erreicht ist.

Dabei meint das in Längsrichtung des Teigbands hintere Dreieck jeweils das bezüglich der Teigbandförderrichtung hintere Dreieck einer Zweiergruppe.

Diese beiden Dreiecke können dann durch die Dreh- und Längsspreizvorrichtung gegensinnig so verdreht werden, dass nach Abschluss der Drehung, die so erfolgt, dass das vordere Dreieck mit dem Uhrzeigersinn, das hintere Dreieck gegen den Uhrzeigersinn gedreht wird, die jeweiligen Basisseiten in eine bezüglich der Längsrichtung des Teigbands vordere Richtung bzw. in die Förderrichtung zeigen. Der Drehung kann ein Auseinanderziehen in Längsrichtung, also ein Längsspreizen, um eine geeignete Strecke vorausgehen. Besonders vorteilhaft ist es, wenn die Drehung der Längsspreizung überlagert wird und vor oder zumindest mit dieser abgeschlossen ist. Damit liegen die Zuschnitte nach dem Drehen und Längsspreizen so, dass gegebenenfalls zum Beispiel ein Aufwickeln zu Croissantteiglingen erfolgen kann.

Durch die Durchführung des Positionierungsvorgangs für jeweils zwei in Laufrichtung hintereinander liegende Zuschnitte in einem Schritt kann entweder bei gleicher Leistung die Taktzahl halbiert werden bzw. es kann bei maximaler Leistung eine doppelte Stückzahl pro Zeiteinheit produziert werden.

Durch die erfindungsgemäße Auftrennung des Vorgangs des Zuschneidens und Positionierens auf zwei Vorrichtungen, die einmal die Stanz- und Querspreizfunktionen durchführen, andererseits für die Dreh- und Längsspreizfunktionen zuständig sind, insbesondere mit der sich durch die spezifische Dreiecksanordnung ergebenden Möglichkeit des diagonalen nach außen Ziehens der Dreiecke, lässt sich eine wartungsarme Maschineanordnung mit hoher Leistung schaffen.

Die gleichmäßige Auftrennung der für den Zuschnitt und die Positionierung erforderlichen Arbeitsschritte durch die Verteilung auf diese beiden Maschinen führt zu einer Verkürzung der Taktzeiten und zu einer gleichmäßigen Aufteilung der bewegten Massen, insbesondere der Werkzeuge, auf beide Maschinen.

Die Teigstücke mit der Grundform können verlustfrei aus dem Teigband zugeschnitten werden. Dadurch werden unnötige Teigverluste vermieden. Bei einer exakt dreieckigen Grundform kann dies beispielsweise so geschehen, dass die Dreiecke einer Reihe in der Längsrichtung des Teigbands, die der Förderrichtung entspricht, jeweils so angeordnet sind, dass auf ein Dreieck, das mit der Basisseite nach außen zeigt, ein weiteres Dreieck folgt, dessen Basisseite nach innen, also in Richtung der Teigbandmittelachse, ausgerichtet ist. Ein entsprechender Zuschnitt ist grundsätzlich auch bei nicht exakt dreieckigen Formen, die ebenfalls von der Erfindung erfasst werden, möglich. Beispielhaft zu nennen sind hier Formen, bei denen die der Basisseite gegenüberliegende Spitze des Dreiecks abgeflacht ist, wobei dies derart ausgeprägt sein kann, dass durch die Abflachung letztlich ein Trapez ausgebildet wird, dessen eine parallele Seite, nämlich die der Basis gegenüber liegende abgeflachte Spitze, vergleichsweise kurz ist. Entsprechend können auf den Schenkeln bzw. den weiteren Seiten einer grundsätzlich dreieckigen Grundform je nach Art des zu formenden Teigstücks gegebenenfalls (kleinere) Rundungen bzw. Einschnitte, Zacken oder dergleichen vorgesehen sein, die mit besonderem Vorteil so ausgestaltet sind, dass ein Ausschneiden weiterhin verlustfrei bzw. zumindest mit möglichst wenig Verlust an Teig möglich ist.

Im Rahmen des erfindungsgemäßen Verfahrens können eine Stanz- und Querspreizvorrichtung und eine Dreh- und Längsspreizvorrichtung aufeinander abgestimmt betrieben und/oder gesteuert werden.

Die beiden Vorrichtungen sind also im Sinne eines störungsfreien Zuschnitts und einer optimalen Positionierung der Zuschnitte, vorzugsweise elektronisch, miteinander verknüpft bzw. miteinander verbunden. Der Betrieb der beiden Maschinen erfolgt also abhängig voneinander, beispielsweise derart, dass gegebenenfalls Picker der Dreh- und Längsspreizvorrichtung synchron bzw. abgestimmt auf die Stanz- und Querspreizvorrichtung arbeiten und/oder angesteuert werden.

Insbesondere können die Stanz- und Querspreizvorrichtung und die Dreh- und Längsspreizvorrichtung mittels einer Master-Slave-Steuerung gesteuert werden, insbesondere derart, dass der Betrieb der Dreh- und Längsspreizvorrichtung als Slave, vorzugsweise über eine elektronische Welle, seitens der Stanz- und Querspreizvorrichtung als Master gesteuert wird.

In diesem Fall wäre also die Stanzvorrichtung, die auch für das Querspreizen zuständig ist, gleichermaßen die übergeordnete Instanz für die Steuerung der Dreh- und Längsspreizvorrichtung, also der sich anschließenden Arbeitsschritte, so dass die beiden Maschinen über eine sogenannte elektronische Welle aufeinander abgestimmt bzw. miteinander synchronisiert sind. Wird die Gesamtvorrichtung nun zum Beispiel gestartet bzw. wieder gestoppt, so kann ein erneutes Hochfahren sehr stabil und synchronisiert erfolgen. Die Stanz- und Querspreizvorrichtung gibt dann als Master zum Beispiel die Referenz für die Drehstellung der zweiten Maschine, der Dreh- und Längsspreizmaschine, vor. Die Picker der Dreheinrichtung arbeiten dann synchronisiert bezüglich der Stanz- und Querspreizmaschine bzw. gemäß deren Vorgaben.

Im Rahmen einer Steuerung der Stanz- und Querspreizvorrichtung und der Dreh- und Längsspreizvorrichtung kann außerdem ein Vergleich wenigstens eines Soll- und Istzustands für die Stanz- und Querspreizvorrichtung und/oder für die Dreh- und Längsspreizvorrichtung durchgeführt werden.

Dementsprechend wird der Zustand einer und vorzugsweise beider Maschinen überprüft, indem aktuell seitens einer Messeinrichtung bzw. einer Computersteuerung und dergleichen für die Maschinen ermittelte Messwerte bzw. den Maschinen zuzuordnende tatsächliche Daten mit vorgegebenen Sollwerten verglichen werden. Stimmen ein Sollwert und ein zugehöriger Istwert, gegebenenfalls im Rahmen eines Toleranzbereichs, nicht ausreichend überein, so erfolgt ein Steuerungseingriff, um beispielsweise die Synchronität der beiden Vorrichtungen wieder herzustellen.

Des Weiteren betrifft die Erfindung eine Vorrichtung zur Erzeugung von Zuschnitten von Teigstücken mit einer, zumindest im Wesentlichen, dreieckigen und gleichschenkligen Grundform aus einem Teigband, wobei sich die Vorrichtung dadurch auszeichnet, dass sie als Stanzvorrichtung dazu ausgebildet ist, über die Breite des Teigbandes Teigstücke mit der Grundform in mehreren längsgerichteten Reihen und mit Basisseiten, die bezüglich der mehreren Reihen von Teigstücken symmetrisch und jeweils parallel bezüglich der sich in Längsrichtung des Teigbands erstreckenden Teigbandmittelachse verlaufen, zuzuschneiden, insbesondere gemäß einem Verfahren, wie es im Vorstehenden geschildert wurde:

Bei der erfindungsgemäßen Vorrichtung ist also eine Stanze vorgesehen, bei der er sich auch allgemein um eine Schneidvorrichtung handeln kann, die dreiecksförmige bzw. im Wesentlichen dreiecksförmige Teigstücke erzeugt, die beim Zuschnitt so angeordnet sind, dass bei mehreren über die Breite des Teigbands nebeneinander anzuordnenden Teigstücken, also mehreren Längsreihen von Teigstücken, die jeweiligen Basisseiten der Dreieckszuschnitte so angeordnet sind, dass diese eine Symmetrie bezüglich der Teigbandmittelachse aufweisen. Die Basisseiten der entsprechenden Dreiecke sind also links und rechts von einem bestimmten Punkt der Teigbandmittelachse, die der Förderrichtung des Teigbands entspricht, entweder alle nach außen bzw. alle nach innen ausgerichtet, wobei diese Anordnung zweckmäßigerweise so gewählt ist, dass direkt in einer Längsreihe aufeinander folgende Dreiecke jeweils entgegengesetzt ausgerichtet sind.

Der Zuschnitt erfolgt also so, dass über die Breite des Teigbands mehrere nebeneinander liegende Teigstücke erzeugt werden, der Zuschnitt also in mehreren Reihen vorgenommen wird, wobei beim Zuschneiden zugleich eine Symmetrie bezüglich der Teigbandmittelachse eingehalten wird.

Eine derartige Anordnung bietet den Vorteil, dass im Rahmen einer nachfolgenden Positionierung der Zuschnitte, vorzugsweise ebenfalls durch die erfindungsgemäße Vorrichtung, sofort eine Querspreizung durchgeführt werden kann, wohingegen bei bekannten Vorrichtungen zunächst eine gerade Bewegung (in Längsrichtung) durchgeführt werden muss, um im Fall von über die gesamte Breite des Teigbands gleichsinnig ausgerichteten Dreiecken die mit der Dreiecksanordnung gegebene Verzahnung der Dreiecke wieder zu lösen.

Die Vorrichtung kann wie erwähnt zur geeigneten Positionierung der Teigstücke zur Weiterverarbeitung nach dem Zuschnitt ausgebildet sein, also insbesondere zu weiteren Spreizvorgängen und Drehungen, so dass beispielsweise ein Aufwickeln zu Croissants möglich ist. In diesem Fall liegt folglich eine Zuschnitts- und Positionierungsvorrichtung vor.

Die Vorrichtung kann im Rahmen der Positionierung zur Spreizung der Teigstücke quer und/oder schräg zur Längsrichtung des Teigbands und/oder zur Drehung der Teigstücke in eine gewünschte Position und/oder zur Spreizung in Längsrichtung des Teigbands ausgebildet sein, insbesondere in einer Reihenfolge, bei der die Querspreizung zuerst erfolgt.

Die Vorrichtung ist also so aufgebaut, dass vorzugsweise zunächst ein Auseinanderfahren bzw. Verschieben der Teigstücke quer bzw. schräg zur Längsrichtung des Teigbands, vorzugsweise eine Diagonalverschiebung nach außen, erfolgt, woraufhin die Teigstücke in eine gewünschte Position gedreht werden, beispielsweise derart, dass alle Basisseiten in die Förderrichtung weisen, wobei der Drehung eine Spreizung in Längsrichtung des Teigbands vorausgehen oder auch angeschlossen werden kann, um beispielsweise einen ein Drehung ermöglichenden bzw. zum Aufrollen oder Aufwickeln geeigneten Abstand der einzelnen Teiglinge herzustellen.

Dabei kann die Querspreizung zweckmäßigerweise so erfolgen, dass diese jeweils für die Teigstücke, die bezogen auf die Breite des Teigbands am weitesten außen angeordnet sind, den größten Betrag aufweist, die äußeren Reihe bzw. Reihen also um die größte Strecke nach außen verschoben werden, die sich daran zur Mitte hin anschließenden nächsten Längsreihen um einen etwas geringeren Betrag diagonal verschoben werden usw. Je nach Art der Zuschnitte bzw. des letztlich zu erzeugenden Teigprodukts kann die Vorrichtung weitere Positionierungsschritte bzw. Positionierungswerkzeuge und -einrichtungen aufweisen bzw. es können einzelne der hier genannten Positionierungsfunktionen nicht implementiert sein.

Die Vorrichtung kann zur Spreizung der Teigstücke zunächst quer und/oder schräg zur Längsrichtung des Teigbands und zur anschließenden Drehung der Teigstücke in eine gewünschte Position und/oder zur Spreizung in Längsrichtung des Teigbands jeweils wenigstens eine separate Förderbandeinrichtung aufweisen. Nach einer Querspreizung, also einem diagonalen Auseinanderziehen der einzelnen sich in Längsrichtung des Teigbands erstreckenden Teigreihen, kann mittels eines durchgehenden Förderbands wieder ein Aneinderlegen der Teigstücke in Längsrichtung erfolgen. Im Weiteren kann dann eine Trennung der Förderbandeinrichtungen vorgesehen sein, um so zum Beispiel auf einem ersten Förderband eine Drehung und dann auf einem zweiten Förderband bzw. einer weiteren Förderbandeinrichtung, die Gegebenenfalls aus mehreren einzelnen, insbesondere parallel zueinander verlaufenden Einzelbändern, bestehen kann, eine Längsspreizung vorzunehmen. Gegebenenfalls kann der Drehung auch eine Längsspreizung vorausgehen. Durch verschiedene Förderbänder kann zum Beispiel der durch eine Spreizung in Längsrichtung bedingte Geschwindigkeitsunterschied wieder ausgeglichen werden, beispielsweise durch einen schnelleren Betrieb des in Förderrichtung gesehen nachfolgenden Bandes. Die separaten Förderbandeinrichtungen, sind also gegebenenfalls mit unterschiedlichen und vorzugsweise genau abstimmbaren und anpassbaren Geschwindigkeiten betreibbar.

Die Vorrichtung kann zum Zuschnitt der Teigstücke eine Stanz- und Querspreizvorrichtung, insbesondere mit Schneiden und/oder Pickern, aufweisen, die dazu ausgebildet ist, wenigstens ein Teigstück wenigstens einer längsgerichteten Reihe nach dem Zuschnitt quer zur Längsrichtung des Teigbands von wenigstens einem Teigstück einer anderen längsgerichteten Reihe bezüglich der Teigbandmittelachse nach außen oder schräg nach außen weg zu ziehen.

Die erfindungsgemäße Vorrichtung weist also eine kombinierte Stanz- und Querspreizvorrichtung, somit eine Kombinationsguillotine, auf. Durch eine als Querspreizvorgang durchgeführte Diagonalverschiebung, die durch die spezielle Anordnung der Dreiecke möglich wird, kann der Spreizweg insgesamt kurz gehalten werden.

Insbesondere kann die Stanz- und Querspreizvorrichtung der erfindungsgemäßen Vorrichtung dazu ausgebildet sein, jeweils zwei dreieckige Teigstücke einer längsgerichteten Reihe, die mit zwei Dreiecksschenkeln derart aneinander liegen, dass die Spitze des in Längsrichtung des Teigbands hinteren Dreiecks nach außen weist, oder eine Anzahl von Teigstücken, die ein ganzzahliges Vielfaches von zwei ist, nach außen oder schräg nach außen weg zu ziehen, und/oder die Vorrichtung kann dazu ausgebildet sein, Teigstücke einer längsgerichteten Reihe, gemeint sind hier jeweils die Reihen in Längsrichtung des Teigbands, nach dem Wegziehen nach außen oder schräg nach außen in Längsrichtung des Teigbands wieder aneinander zu legen.

Die Vorrichtung kann weiterhin eine Dreh- und Längsspreizvorrichtung, insbesondere mit Pickern, aufweisen, die dazu ausgebildet ist, Teigstücke einer längsgerichteten Reihe in Längsrichtung des Teigbands auseinander zu ziehen und mit ihrer jeweiligen Basisseite bezüglich der einer Förderrichtung des Teigbands entsprechenden Längsrichtung nach vorne zu drehen, insbesondere derart, dass die Drehung begonnen wird, sobald die Teigstücke etwas in Längsrichtung auseinander gezogen sind und/oder beendet wird, bevor eine endgültige Position der Teigstücke in der Längsrichtung erreicht ist.

Die Vorrichtung besteht also in ihrem Grundaufbau aus zwei verschiedenen Maschinen bzw. Vorrichtungsteilen, nämlich einer Stanz- und Querspreizvorrichtung, an die sich eine Dreh- und Längsspreizvorrichtung als zweiter Vorrichtungsteil anschließt. Den unterschiedlichen Maschinenteilen sind vorzugsweise jeweils eigene Förderbandeinrichtungen zugeordnet, wobei bei der Dreh- und Längsspreizvorrichtung ein weiteres Aufteilen der Förderbandeinrichtungen von Vorteil ist, um durch einen Betrieb mit unterschiedlichen Geschwindigkeiten nach der Drehung bzw. bezüglich der Längsspreizung einen Ausgleich herzustellen.

Die Dreh- und Längsspreizvorrichtung kann dazu ausgebildet sein, zwei Teigstücke einer längsgerichteten Reihe, die mit zwei Dreiecksschenkeln derart aneinander liegen, dass die Spitze des in der einer Förderrichtung entsprechenden Längsrichtung des Teigbands hinteren Dreiecks nach außen weist, mittels einer Dreh- und Längsspreizvorrichtung in Längsrichtung des Teigbands auseinander zu ziehen und mit ihrer jeweiligen Basisseite nach vorne zu drehen, insbesondere derart, dass die Drehung begonnen wird, sobald die Teigstücke etwas bzw. um einen bestimmten Betrag in Längsrichtung auseinander gezogen sind und/oder beendet wird, bevor eine endgültige Position der Teigstücke in der Längsrichtung erreicht ist.

Durch diese Maßnahmen werden die Dreiecke derart gleichsinnig angeordnet, dass ein Weiterverarbeiten, beispielsweise durch Aufwickeln, unter Einhaltung der hierfür zu Grunde zu legenden Qualitätsvorgaben möglich ist.

Die Vorrichtung kann insbesondere dazu ausgebildet sein, die Teigstücke mit der Grundform verlustfrei aus dem Teigband zuzuschneiden.

So können mit der erfindungsgemäßen Vorrichtung nicht nur die Transportwege, also insbesondere die Hubwege für die Positionierung der Zuschnitte, optimiert werden, sondern es kann zudem eine sehr sparsame Teigverarbeitung realisiert werden.

Die Vorrichtung kann insbesondere eine Stanz- und Querspreizvorrichtung und eine Dreh- und Längsspreizvorrichtung aufweisen, die aufeinander abgestimmt betreibbar und/oder steuerbar sind.

So kann trotz der Aufteilung bzw. Auftrennung der Arbeitsschritte auf zwei unterschiedliche Vorrichtungsteile ein synchronisierter bzw. abgestimmter Betrieb erfolgen.

Die Stanz- und Querspreizvorrichtung und die Dreh- und Längsspreizvorrichtung können mittels einer Master-Slave-Steuerung steuerbar sein, insbesondere derart, dass der Betrieb der Dreh- und Längsspreizvorrichtung als Slave, vorzugsweise über eine elektronische Welle, seitens der Stanz- und Querspreizvorrichtung als Master steuerbar ist.

In diesem Fall werden also die Picker der Dreheinrichtung beispielsweise synchron zur bzw. zu Vorgaben der Stanz- und Querspreizmaschine betrieben. Der eine Maschinenteil, hier also die Stanz- und Querspreizvorrichtung, bestimmt dann, beispielsweise durch Vorgabe eines Anfangsimpulses, den Betrieb des zweiten Vorrichtungsteils, der Dreh- und Längsspreizvorrichtung.

Die Vorrichtung kann im Rahmen einer Steuerung der Stanz- und Querspreizvorrichtung und der Dreh- und Längsspreizvorrichtung zum Vergleich wenigstens eines Soll- und Istzustands für die Stanz- und Querspreizvorrichtung und/oder die Dreh- und Längsspreizvorrichtung ausgebildet sein.

Auf diese Art und Weise erfolgt also durch die Messung von Istwerten bzw. die Vorgabe von Sollwerten, die gegebenenfalls kontinuierlich oder in bestimmten Abständen ermittelt und/oder verglichen werden, eine Überprüfung des Betriebs der Anlage durch eine entsprechende Steuerungseinrichtung bzw. Elektronik. Die Sollwerte können durch die Steuerungseinrichtung nach geeigneten Formeln berechnet werden bzw. in dieser abgespeichert sein.

Die Vorrichtung kann als Stanz- und Querspreizvorrichtung und /oder mit einer ortsfest in einem Maschinenrahmen montierten oder montierbaren Führungsbahnplatte ausgebildet sein, die, insbesondere zumindest im Wesentlichen in Längsrichtung des Teigbands und/oder mit sich in Längsrichtung der Teigbands veränderndem Abstand verlaufende, Führungsbahnen für Stanzformen, insbesondere mit Schneiden und/oder Pickern, zur geeigneten Positionierung der Teigstücke aufweist, insbesondere zur Positionierung der Teigstücke mit einem bestimmten Abstand.

Weiterhin kann die Vorrichtung eine Führungseinrichtung aufweisen, auf der einzelne Stanzformen, insbesondere Stanzformen mit Schneiden und/oder Pickern, der Stanzvorrichtung quer, insbesondere zumindest im Wesentlichen senkrecht, zur Längsrichtung des Teigbands bewegbar sind.

Die Erfindung betrifft somit einerseits ein Verfahren zum Zuschnitt von Teigstücken und gegebenenfalls ebenso zur anschließenden korrekten Positionierung der zugeschnittenen Dreiecksstücke, andererseits eine Vorrichtung, die zumindest ein entsprechendes Zuschnittswerkzeug aufweist, wobei diese Vorrichtung vorzugsweise für eine ebenfalls vorgesehene Positionierung der Teigstücke so ausgestaltet ist, dass eine Aufteilung in eine Stanz- und Querspreizvorrichtung und eine sich in Förderrichtung anschließende Dreh- und Längsspreizvorrichtung gegeben ist, so dass durch die Kombinationsguillotine (die Stanz- und Querspreizvorrichtung) und die sich anschließende Dreh- und Längsspreizvorrichtung eine optimale Ausnutzung der durch den besonderen Zuschnitt gegebenen Vorteile im Sinne einer möglichst genauen Erstellung der Zuschnitte und einer exakten Anordnung zur Weiterverarbeitung erreicht wird.

Weitere Vorteile, Merkmale und Einzelheiten der Erfindung ergeben sich anhand der folgenden Ausführungsbeispiele sowie aus den Zeichnungen. Dabei zeigen:
- Figur 1: eine Skizze der im Falle eines Zuschnitts gemäß dem Stand der Technik erforderlichen Spreizwege,
- Figur 2: eine Skizze einer Querspreizung im Rahmen eines erfindungsgemäßen Zuschnitt- und Positionierungsverfahrens für Teigstücke,
- Figuren 3A-3C: Skizzen zur Durchführung eines erfindungsgemäßen Zuschnitt- und Positionierungsverfahrens mit einer entsprechenden Vorrichtung bei vier Längsreihen von Teigstücken über die gesamte Breite des Teigbandes,
- Figur 4: eine Skizze zur Durchführung eines erfindungsgemäßen Verfahrens bei einem sechsreihigen Zuschnitt von Teigstücken,
- Figur 5: eine erfindungsgemäße Vorrichtung zur Erzeugung von Zuschnitten von Teigstücken in einer Ansicht von oben und
- Figur 6: die Vorrichtung der Figur 5 in einer Ansicht von unten.

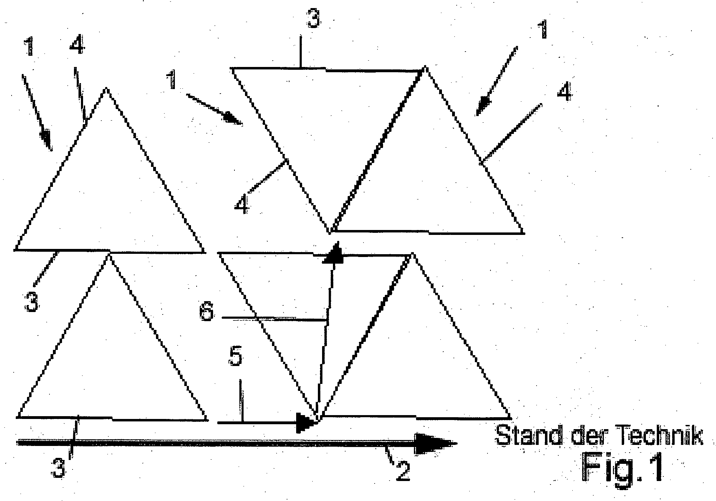

In der Figur 1 ist eine Skizze der bei einem Zuschnitt gemäß dem Stand der Technik erforderlichen Spreizwege gezeigt, wobei die Teigstücke 1, bei denen es sich im hier gezeigten Beispiel um exakte gleichseitige Dreiecke handelt, über die gesamte Breite des Teigbandes gleichsinnig ausgerichtet sind, wobei allerdings in der Darstellung nur zwei Längsreihen von Dreiecken angedeutet sind.

Die Förderrichtung des Teigbands bzw. der aus diesem gewonnenen Zuschnitte parallel zur Mittelachse des Teigbands ist durch die Linie 2 angedeutet. Bedingt durch die über die gesamte Breite des Teigbands gleichsinnige Ausrichtung der Dreiecke, die in Förderrichtung jeweils so angeordnet sind, dass die Basisseiten direkt aufeinander folgender Dreiecke in unterschiedliche Richtungen weisen bzw. jeweils zwei Schenkel aufeinander folgender Dreiecke unmittelbar aneinander liegen, muss zunächst die Verzahnung der Teigstücke 1 gelöst werden, um eine geeignete Positionierung durchführen zu können. Die Basis 3 der jeweiligen Dreiecke 1, die bei den hier gezeigten gleichseitigen Dreiecken genau so lang ist wie die jeweiligen Schenkel 4, muss also zunächst durch eine geradlinige, in Laufrichtung bzw. Förderrichtung gemäß der Linie 2 weisende Bewegung verlassen werden, wie dies durch den Pfeil 5 angedeutet ist, bevor, gemäß dem Pfeil 6, eine Verscheibung nach außen erfolgen kann. Dies bedeutet, dass beträchtliche Spreizwege und entsprechende Leerhubstrecken der Werkzeuge in Kauf genommen werden müssen.

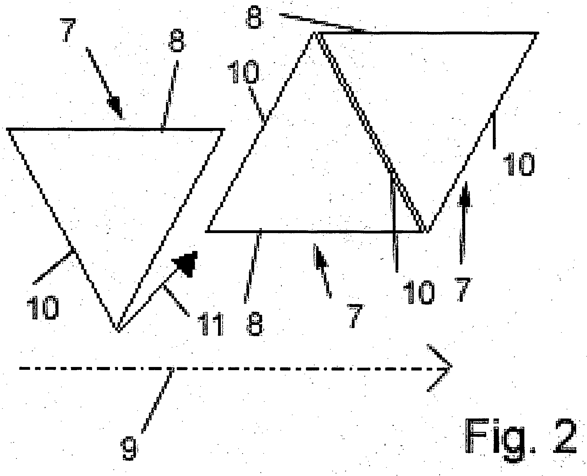

Die Figur 2 zeigt eine Skizze einer Querspreizung im Rahmen eines erfindungsgemäßen Zuschnitt- und Positionierungsverfährens für Teigstücke 7, die wiederum eine exakte dreieckige Grundform aufweisen, bei der es sich im gezeigten Fall um eine gleichseitige Form handelt.

Ausgangspunkt des erfindungsgemäßen Zuschnitt- und Positionierungsverfahrens ist ein Zuschnitt derart, dass die Basisseiten 8, also bei einem gleichseitigen Dreieck wie im Fall der Teigstücke 7, dessen Seiten identisch sind, eine beliebige der drei Seiten, so angeordnet sind, dass sie bezüglich einer Mittelachse des Teigbands, parallel zu der durch die Linie 9 angedeuteten Förderrichtung, symmetrisch angeordnet sind.

Die Basisseiten 8 aller Teigstücke 7, wobei die Teigstücke 7 die Schenkel 10 aufweisen, sind somit ausgehend von der Mittelachse des Teigbands auf gedachten orthogonalen Linien nach links und rechts jeweils immer gleich angeordnet, so dass sich eine bezüglich dieser Mittelachse bzw. Längsachse des Teigbands spiegelsymmetrische Anordnung ergibt.

Durch diese spezielle Anordnung, die aus der Figur 2, die nur Teigstücke 7 einer längsgerichteten Reihe zeigt, nicht abgeleitet werden kann, ist es möglich, direkt im Anschluss an den Zuschnitt ein Querspreizen durch eine Diagonalverschiebung, wie hier durch den Pfeil 11 angedeutet, vorzunehmen. Auf diese Art und Weise kann der insgesamt benötigte Spreizweg deutlich verkürzt werden, da von Anfang an eine Bewegung diagonal nach außen möglich ist.

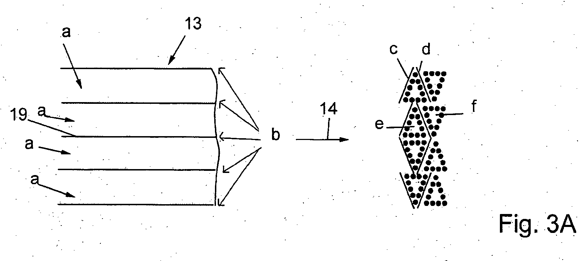

Die Figuren 3A-3C zeigen Skizzen zur Durchführung eines erfindungsgemäßen Zuschnitt- und Positionierungsverfahrens mit einer entsprechenden Vorrichtung bei vier Längsreihen von Teigstücken 12 über die Breite des Teigbands 13.

Dabei wird das Teigband 13 zunächst, wie in der Figur 3A gezeigt ist, gemäß der Schnittlinien b in mehrere Bahnen a aufgeschnitten. Im hier gezeigten Fall handelt es sich um vier Bahnen, so dass Teigstücke in vier nebeneinanderliegenden Reihen über die Breite des Teigbandes, also in vier Längsreihen, zugeschnitten werden können. Der Abstand der einzelnen Schnittlinien b gibt die Höhe des gewünschten Zuschnitts, also die auf die Basisseiten bezogenen Höhen der Teigstücke 12, an.

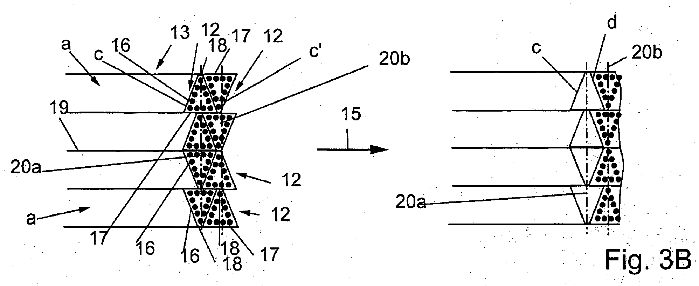

Die Darstellung jeweils rechts in den Figuren 3A und 3B, auf die die Pfeile 14 und 15 verweisen, zeigt die auf das entsprechende Werkzeug, hier die Stanz- und Querspreizvorrichtung, bezogene Ansicht der Verfahrensschritte. Dabei sind in der Darstellung der Figur 3A auf der rechten Seite die Längsschnitte gemäß den Schnittlinien b nicht mehr gezeigt. Zu sehen ist hingegen, dass die Stanz- und Querspreizvorrichtung bezüglich der Laufrichtung, die den Pfeilen 14 und 15 der Figuren 3A und 3B entspricht, hinten V-förmig angeordnete Schneiden c und d aufweist, zu denen jeweils Picker e vorgesehen sind. In Laufrichtung vorne sind dagegen nur Picker f vorgesehen.

Bei den zugeschnittenen Teigstücken 12 gemäß der Figur 3B handelt es sich um gleichschenklige Dreiecke mit den Schenkeln 16 und der Basis 17, wobei die der Basis 17 gegenüberliegende Spitze 18 abgeflacht ist, so dass keine strenge Dreiecksform vorliegt, sondern genau genommen eine Trapezform mit einer allerdings sehr kurzen parallelen Seite, die sich aber im Wesentlichen als Dreieck bezeichnen lässt.

Damit sich die Teigstücke 12 mit der Dreiecksforn diagonal nach außen schieben lassen, erfolgt die Anordnung der Dreiecke symmetrisch zur Mittelachse 19 des Teigbands und zwar derart, dass bei jeweils zwei in der durch die Pfeile 14 und 15 gegebenen Laufrichtung aufeinander folgenden Teigstücken 12 bzw. Dreiecken, ausgehend vom vorderen Dreieck einer Bahn a, das jeweils hintere Dreieck so angeordnet ist, dass die Spitze 18 nach außen weist.

Durch Schnitte des V-förmigen Werkzeugs werden die Dreiecke erzeugt, wobei die Schneide c die Kante c' dadurch ausbildet, dass für den Folgeschnitt das Teigband 13 unter dem Werkzeug hindurch von eine ersten Position (zur Schneide c) auf ein zweite Position (zur Erzeugung der Kante c') bewegt wird. Die entsprechenden unterschiedlichen Werkzeugpositionen sind durch die Linien 20a und 20b angedeutet.

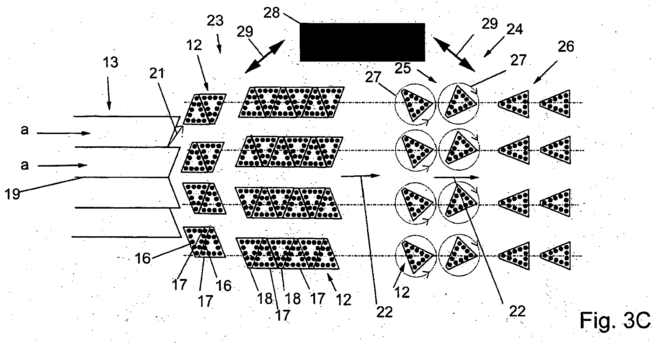

Der Ablauf der Positionierung im Anschluss an den Zuschnitt ist in der Figur 3C gezeigt.

Ausgangspunkt ist das Teigband 13, das wie geschildert in mehrere Bahnen a, also in mehrere Reihen, in Längsrichtung aufgeschnitten wurde. Nach dem entsprechenden Zuschnitt der Teigstücke 12 werden diese ausgehend von der Mittelachse 19 in Zweiergruppen (die Spitze 18 des jeweils hinteren Dreiecks weist nach außen) diagonal nach außen verschoben, wie hier durch den Pfeil 21 angedeutet ist.

Dabei werden die Teigstücke 12 der jeweils äußeren Bahnen a bzw. äußeren längsgerichteten Reihen um einen größeren Betrag diagonal nach außen verschoben als die der inneren Reihen. Die Lage des Pfeils 21 relativ zur Laufrichtung bzw. Längsrichtung des Teigbands 13 gibt den Winkel der Diagonal- bzw. Querverschiebung an. Dieser Verschiebungswinkel ist im hier gezeigten Fall etwas kleiner als die jeweils zwischen der Basisseite und einem Schenkel der dreieckigen Teigstücke 12 eingeschlossenen Winkel. Auch kleinere Verschiebungswinkel (und demgemäß ein höherer Längsverschiebungsanteil der Diagonalverschiebung) sind möglich. Die obere Grenze für den Verschiebungswinkel wird durch die Lage der Schenkel der dreieckigen Teigstücke 12 relativ zur Längsrichtung des Teigbands 13 vorgegeben.

Wie erwähnt zeichnen sich die zwei aneinander liegenden Teigstücke, damit die gewünschte Diagonalverschiebung überhaupt möglich ist, dadurch aus, dass das in Laufrichtung, hier angedeutet durch die Pfeile 22, hintere Dreieck jeweils mit der Spitze 18 nach außen zeigt.

Schließlich werden die Dreiecke, noch im Bereich der Stanz- und Querspreizvorrichtung 23, in Längsrichtung wieder aneinander geschoben, so dass aus den Zweiergruppen erneut Längsreihen mehrerer Dreiecke entstehen.

Im Anschluss daran erfolgt die Weiterverarbeitung durch die Dreh- und Längsspreizvorrichtung 24, bei der im Bereich 25 der Durchführung der Drehung eine erste Förderbandeinrichtung, im anschließenden Bereich 26 eine zweite Förderbandeinrichtung vorgesehen ist, die mit unterschiedlichen Geschwindigkeiten betrieben werden können, um so durch die Positionierung, z. B. die Längsspreizung, bewirkte unerwünschte Effekte, z. B. im Hinblick auf die Abstände der Teigstücke 12, wieder ausgleichen zu können.

Im Bereich der Dreh- und Längsspreizvorrichtung 24 erfolgt, einer Längsspreizung überlagert, eine gegensinnige Drehung jeweils zweier aufeinander folgender Teigstücke 12, wie hier durch die Kreise 27 mit dem Drehpfeil angedeutet ist, und zwar derart, dass die Basisseiten 17 anschließend in die gleiche Richtung (die Förderrichtung) weisen. Nach dem Abschluss der Längsspreizung zum Bereich 26 sind die Teigstücke 12 so positioniert, dass sie in der gewünschten Art und Weise weiterverarbeitet, also beispielsweise aufgewickelt werden können. Der Betrag der erforderlichen bzw. gewünschten Längsspreizung hängt nicht zuletzt davon ab, wie das Verhältnis der Länge der Basisseiten 17 zu den auf die jeweiligen Basisseiten 17 bezogenen Höhen der Dreiecke ist. Der Betrag der Längsspreizung muss so gewählt werden, dass das Drehen der Teigstücke 12 gemäß den Kreisen 27 möglich ist, ohne dass die Teigstücke 12 beim Drehen aneinander stoßen. Die Kreise 27, die die Dreiecke umgeben, können somit im Rahmen der Bestimmung des Betrags des Längsspreizwegs als Maß verwendet werden. Bei "längeren" Dreiecken (also Dreiecken mit einer Basisseite, die im Vergleich zur zugehörigen Höhe eher kurz ist) ist der Längsspreizweg im Vergleich zu gleichseitigen Dreiecken mit unveränderter Basislänge zu vergrößern.

Die Steuerung des Betriebs der Stanz- und Querspreizvorrichtung 23 sowie der Dreh- und Längsspreizvorrichtung 24 erfolgt mittels einer Elektroniksteuerung 28, wobei die entsprechenden Steuerungsvorgänge durch die Doppelpfeile 29 angedeutet sind. Die Steuerung erfolgt nach Art eines Master-Slave-Betriebs, der der Synchronisierung des Betriebs der beiden Vorrichtungsteile dient. Dabei bildet die Stanz- und Querspreizvorrichtung 23 steuerungstechnisch den Master, die Dreh- und Längsspreizvorrichtung 24 den Slave.

Durch die erfindungsgemäße Anordnung der Dreiecke sowie die kombinierte Stanz- und Querspreizmaschine, die von der Dreh- und Längsspreizmaschine abgetrennt ist, wobei der Betrieb der beiden Vorrichtungsbestandteile selbstverständlich aufeinander abgestimmt erfolgt, sind ein Zuschnitt und eine Positionierung der Teigstücke 12 nicht nur exakt, sondern auch mit insgesamt geringen Spreizwegen und bei geringen Hubbewegungen der Maschinenteile möglich.

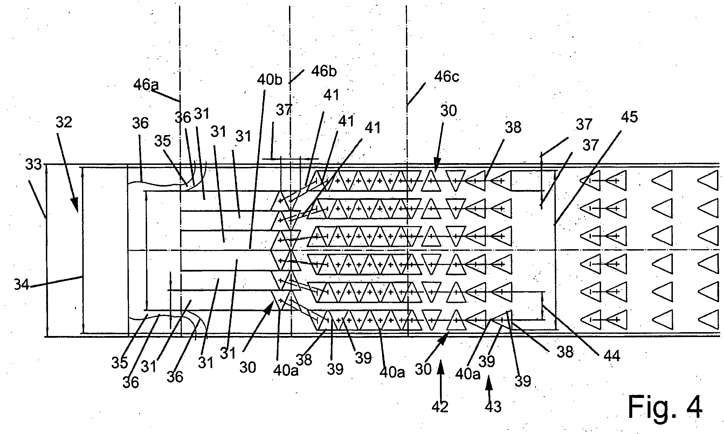

Die Figur 4 zeigt schließlich eine Skizze zur Durchführung eines erfindungsgemäßen Verfahrens bei einem sechsreihigen Zuschnitt von Teigstücken, die hier mit dem Bezugszeichen 30 bezeichnet sind. Dabei wird zunächst ein Teigband 32 in insgesamt sechs Längsreihen 31 oder Bahnen aufgeschnitten, um so über die Breite des Teigbands 32 einen Zuschnitt von jeweils sechs nebeneinander liegenden Teigstücken 30 zu ermöglichen.

Der Pfeil 33 gibt dabei die Breite des Profils einer entsprechenden Förderbandeinrichtung an, der Pfeil 34 die Breite des Teigbands 32.

Von dieser ursprünglichen Breite des Teigbands 32 bleiben nach dem Längsschneiden in die Reihen 31 jeweils seitlche Teigreste 35 übrig, die entsprechend abgeführt werden, wie hier durch die Linien 36 angedeuet. Die Teigstücke 30 werden mit einer Basisbreite, die durch die Pfeile 37 gegeben ist, derart ausgestanzt, dass die Basen 38 der gleichschenkligen Teigstücke 30 mit den Schenkeln 39 und der abgeflachten Spitze 40 symmetrisch und parallel zur Teigbandmittelachse 40b verlaufen. Eine typische, aber lediglich beispielhaft zu verstehende Basisbreite liegt zwischen 10 und 20 cm.

An den Stanzvorgang schließt sich der Querspreizvorgang mit einer Diagonalverschiebung gemäß den Linien 41 an. Wie aus der Darstellung ersichtlich ist, erfolgt das Querspreizen jeweils bezüglich einer Gruppe von zwei in Förderrichtung hintereinander liegenden Teigstücken 30. In der Folge werden die Dreiecke dann in Längsrichtung wieder aneinander gelegt (z. B. mit Hilfe von Pickern bzw. mit geeigneten Geschwindigkeiten betriebenen Förderbandeinrichtungen). Die Linie 46a der Figur 4 steht für den Bereich, in dem das Längsschneiden und Abführen der seitlichen Teigreste erfolgt, die Linie 46b für das Stanzen und Querspreizen der Dreiecke und die Linie 46c schließlich für das nachfolgend beschriebene Längsspreizen und Drehen der Dreiecke.

Im Bereich 42, in Förderrichtung anschließend an die Linie 46c, erfolgt zunächst ein Längsspreizen der Teigstücke 30, also eine Erhöhung des Abstands der einzelnen Dreiecke in der Förderrichtung, an die sich dann schließlich eine Drehung der Teigstücke im Bereich 43 anschließt.

Nach der Drehung und dem Abschluss der Längsspreizung sind die Teigstücke 30 alle so ausgerichtet, dass sie mit der Basisseite 38, deren Breite wiederum durch die Pfeile 37 angedeutet ist, in die Förderrichtung weisen. Der Abstand in Querrichtung zwischen den einzelnen Teigstücken ist durch den Doppelpfeil 44 angedeutet, der Abstand zwischen den jeweils äußeren Ecken der äußeren Dreiecke bzw. Teigstücke 30 durch den Doppelpfleil 45. Die wie geschildert erzeugten positionierten Teigstücke 30 können wie gewünscht weiterverarbeitet werden, beispielsweise, gegebenenfalls nach einer weiteren Längsspreizung, zu Croissants aufgewickelt werden. So bietet die erfindungsgemäße Zuschnittsanordnung, die auf der beschriebenen Symmetrie bezüglich der Mittelachse 40b des Teigbands 32 basiert, die Möglichkeit, einen optimalen Zuschnitt bei einer gleichzeitig einfachen Positionierung mit kurzen Spreizwegen zu realisieren.

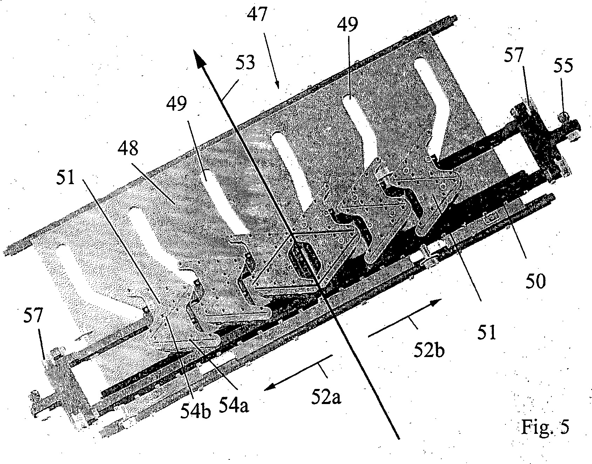

In der Figur 5 ist eine erfindungsgemäße Vorrichtung 47 zur Erzeugung von Zuschnitten von Teigstücken in einer Ansicht von oben gezeigt. Die Vorrichtung 47 verfügt über eine Führungsbahnplatte 48, in der ihrerseits mehrere Führungsbahnen 49 vorgesehen sind, die dazu dienen, die dreieckigen Teigzuschnitte auf Abstand zu positionieren. Dies geschieht im Zusammenwirken mit einer Führungseinrichtung 50, auf der Stanzformen 51 gemäß den Pfeilen 52a und 52b quer, hier im Wesentlichen senkrecht, zur Längsrichtung des hier nicht gezeigten Teigbands bzw. zur Förderrichtung des Teigbands gemäß dem Pfeil 53 bewegbar sind. Auf Grund dieser Bewegungsmöglichkeit quer zur Längsrichtung des Teigbands können die Stanzformen 51 in den Führungsbahnen 49, deren Abstand in Richtung des Pfeils 53 zunächst zunimmt, geführt werden.

Dabei weisen die Stanzformen 51 für jeweils eine Reihe je zwei Schneiden 54a und 54b auf (in der Darstellung nur in ihrer Lage von oben zur erkennen), die so verlaufen, dass mit ihnen der dreieckige Zuschnitt erzeugt werden kann (vgl. die Beschreibung zu den Figuren 3A - 3C). Insgesamt können so mittels der hier gezeigten Anordnung von sechs Stanzformen 51 bzw. sechs Werkzeugen über die Breite eines Teigbands sechs Längsreihen von Teigstücken in Dreiecksform erzeugt werden.

Weiterhin ist in der Figur 5 ein Aufnahmebolzen 55 im Endbereich der Führungseinrichtung 50 dargestellt, der dazu dient, ein Einhängen in einen hier nicht gezeigten Antrieb für eine Vor-, Rück- sowie Auf- und Abbewegung zu ermöglichen.

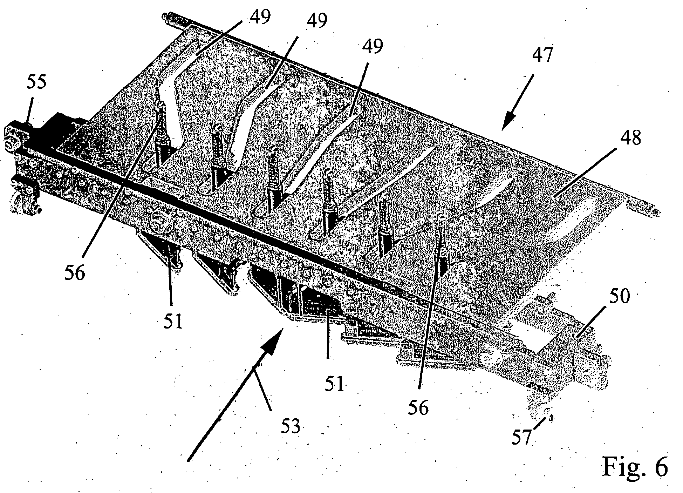

Die Figur 6 zeigt die Vorrichtung 47 der Figur 5 in einer Ansicht von unten, wobei in dieser Darstellung im Detail der Verlauf der Führungsbahnen 49 der Führungsbahnplatte 48 zu erkennen ist, die zunächst in einem vorderen Bereich parallel zum Pfeil 53 verlaufen, der die Förderrichtung und die Symmetrieachse der Vorrichtung 47 angibt, um dann mit einem mit dem Abstand der einzelnen Führungsbahn 49 zur Symmetrieachse wachsenden Winkel gegenüber der Achsrichtung nach außen geführt zu werden, um dann schließlich in einem hinteren Bereich wieder parallel zum Pfeil 53 zu verlaufen.

In die Führungsbahnen 49 greifen Schraubvorrichtungen 56 der Stanzformen 51 bzw. der Stanzwerkzeuge ein, wodurch diese entsprechend dem Verlauf der Führungsbahnen 49 geführt werden. Auf diese Art und Weise kann mit Hilfe von Pickern an den Stanzformen 51 bzw. den Werkzeugen im Rahmen der Positionierung die gewünschte Beabstandung der Dreieckszuschnitte herbeigeführt werden.

### Bezugszeichenliste

- 1: Teigstück
- 2: Linie (in Förderrichtung)
- 3: Basis
- 4: Schenkel
- 5: Pfeil
- 6: Pfeil
- 7: Teigstück
- 8: Basisseite
- 9: Linie (in Förderrichtung)
- 10: Schenkel
- 11: Pfeil
- 12: Teigstück
- 13: Teigband
- a: Bahn
- b: Schnittlinie
- 14, 15: Pfeile
- c, d: Schneiden
- e, f: Picker
- 16: Schenkel
- 17: Basis
- 18: Spitze
- 19: Mittelachse
- c': Kante
- 20a, 20b: Linien
- 21, 22: Pfeil
- 23: Stanz- und Querspreizvorrichtung
- 24: Dreh- und Längsspreizvorrichtung
- 25,26: Bereiche
- 27: Kreis
- 28: Elektroniksteuerung
- 29: Doppelpfeil
- 30: Teigstück
- 31: Längsreihe
- 32: Teigband
- 33: Pfeil (Profilbreite)
- 34: Pfeil (Teigbandbreite)
- 35: Teigreste
- 36: Linie
- 37: Pfeil (Basisbreite)
- 38: Basis
- 39: Schenkel
- 40a: Spitze
- 40b: Teigbandmittelachse
- 41: Linie (Diagonalverschiebung)
- 42,43: Bereiche
- 44: Doppelpfeil (Abstand der Teigstücke)
- 45: Doppelpfeil (Abstand der äußeren Dreiecke)
- 46a - 46c: Linien
- 47: Vorrichtung zur Erzeugung von Zuschnitten von Teigstücken
- 48: Führungsbahnplatte
- 49: Führungsbahn
- 50: Führungseinrichtung
- 51: Stanzform
- 52a; 52b: Pfeile
- 53: Pfeil
- 54a, 54b: Schneide
- 55: Aufnahmebolzen
- 56: Schraubvorrichtung

## Patentansprüche

1. Verfahren zur Erzeugung von Zuschnitten von Teigstücken (7, 12, 30) mit einer, zumindest im Wesentlichen, dreieckigen und gleichschenkeligen Grundform aus einem Teigband (13, 32), **dadurch gekennzeichnet, dass** über die Breite des Teigbands (13, 32) Teigstücke (7, 12, 30) mit der Grundform in mehreren längsgerichteten Reihen (a, 31) und mit Basisseite (8, 17, 38), die, bezüglich der mehreren Reihen (a, 31) von Teigstücken (7, 12, 30), symmetrisch und jeweils parallel zu der sich in Längsrichtung des Teigbands (13, 32) erstreckenden Teigbandmittelachse (19, 40b) verlaufen, zugeschnitten werden.

2. Verfahren nach Anspruch 1, **dadurch gekennzeichnet, dass** die Teigstücke (7, 12, 30) im Rahmen des Verfahrens nach dem Zuschnitt zur Weiterverarbeitung geeignet positioniert werden.

3. Verfahren nach Anspruch 2, **dadurch gekennzeichnet, dass** die Teigstücke (7, 12, 30) im Rahmen der Positionierung quer und/oder schräg zur Längsrichtung des Teigbands (13, 32) gespreizt und/oder in eine gewünschte Position gedreht und/oder in Längsrichtung des Teigbands (13, 32) gespreizt werden, insbesondere in einer Reihenfolge, bei der die Querspreizung zuerst erfolgt.

4. Verfahren nach Anspruch 3, **dadurch gekennzeichnet, dass** die Teigstücke (7, 12, 30) im Rahmen der Positionierung jeweils auf wenigstens einer separaten Förderbandeinrichtung zunächst quer und/oder schräg zur Längsrichtung des Teigbands (13, 32) gespreizt und anschließend in eine gewünschte Position gedreht und/oder in Längsrichtung des Teigbands (13, 32) gespreizt werden.

5. Verfahren nach einem der vorangehenden Ansprüche, **dadurch gekennzeichnet, dass** die Teigstücke (7, 12, 30) mittels einer Vorrichtung zugeschnitten werden, die als Stanz- und Querspreizvorrichtung (23), insbesondere mit Schneiden (c, d) und/oder Pickern (e, f), wenigstens ein Teigstück (7, 12, 30) wenigstens einer längsgerichteten Reihe (a, 31) nach dem Zuschnitt quer zur Längsrichtung des Teigbands (13, 32) von wenigstens einem Teigstück (7, 12, 30) einer anderen längsgerichteten Reihe (a, 31) bezüglich der Teigbandmittelachse nach außen oder schräg nach außen weg zieht.

6. Verfahren nach Anspruch 5, **dadurch gekennzeichnet, dass** die Stanz- und Querspreizvorrichtung (23) jeweils zwei Teigstücke (7, 12, 30) einer längsgerichteten Reihe (a, 31), die mit zwei Dreiecksschenkeln derart aneinander liegen, dass die Spitze (18, 40a) des in der einer Förderrichtung entsprechenden Längsrichtung des Teigbands (13, 32) hinteren Dreiecks nach außen weist, oder eine Anzahl von Teigstücken (7, 12, 30), die ein ganzzahliges Vielfaches von zwei ist, nach außen oder schräg nach außen weg zieht und/oder dass die Teigstücke (7, 12, 30) einer längsgerichteten Reihe (a, 31) nach dem Wegziehen nach außen oder schräg nach außen in Längsrichtung des Teigbands (13, 32) wieder aneinander gelegt werden.

7. Verfahren nach einem der vorangehenden Ansprüche, **dadurch gekennzeichnet, dass** Teigstücke (7, 12, 30) einer längsgerichteten Reihe (a, 31) mittels einer Dreh- und Längsspreizvorrichtung (24), insbesondere mit Pickern, in Längsrichtung des Teigbands (13, 32) auseinander gezogen und mit ihrer jeweiligen Basisseite (8, 17, 38) bezüglich der einer Förderrichtung des Teigbands (13, 32) entsprechenden Längsrichtung nach vorne gedreht werden, insbesondere derart, dass die Drehung begonnen wird, sobald die Teigstücke (7, 12, 30) etwas in Längsrichtung auseinander gezogen sind und/oder beendet wird, bevor eine endgültige Position der Teigstücke (7, 12, 30) in der Längsrichtung erreicht ist.

8. Verfahren nach einem der Ansprüche 6 oder 7, **dadurch gekennzeichnet, dass** zwei Teigstücke (7, 12, 30) einer längsgerichteten Reihe (a, 31), die mit zwei Dreiecksschenkeln (10, 16, 39) derart aneinander liegen, dass die Spitze des in der einer Förderrichtung entsprechenden Längsrichtung des Teigbands (13, 32) hinteren Dreiecks nach außen weist, mittels einer Dreh- und Längsspreizvorrichtung (24) in Längsrichtung des Teigbands (13, 32) auseinander gezogen und mit ihrer jeweiligen Basisseite (8, 17, 38) nach vorne gedreht werden, insbesondere derart, dass die Drehung begonnen wird, sobald die Teigstücke (7, 12, 30) etwas in Längsrichtung auseinander gezogen sind und/oder beendet wird, bevor eine endgültige Position der Teigstücke (7, 12, 30) in der Längsrichtung erreicht ist.

9. Verfahren nach einem der vorangehenden Ansprüche, **dadurch gekennzeichnet, dass** die Teigstücke (7, 12, 30) mit der Grundform verlustfrei aus dem Teigband (13, 32) zugeschnitten werden.

10. Verfahren nach einem der vorangehenden Ansprüche, **dadurch gekennzeichnet, dass** im Rahmen des Verfahrens eine Stanz- und Querspreizvorrichtung (23) und eine Dreh- und Längsspreizvorrichtung (24) aufeinander abgestimmt betrieben und/oder gesteuert werden.

11. Verfahren nach Anspruch 10, **dadurch gekennzeichnet, dass** die Stanz- und Querspreizvorrichtung (23) und die Dreh- und Längsspreizvorrichtung (24) mittels einer Master-Slave-Steuerung gesteuert werden, insbesondere derart, dass der Betrieb der Dreh- und Längsspreizvorrichtung (24) als Slave, vorzugsweise über eine elektronische Welle, seitens der Stanz- und Querspreizvorrichtung (23) als Master gesteuert wird.

12. Verfahren nach einem der Ansprüche 10 oder 11, **dadurch gekennzeichnet, dass** im Rahmen einer Steuerung der Stanz- und Querspreizvorrichtung (23) und der Dreh- und Längsspreizvorrichtung (24) ein Vergleich wenigstens eines Soll- und Istzustands für die Stanz- und Querspreizvorrichtung (23) und/oder für die Dreh- und Längsspreizvorrichtung (24) durchgeführt wird.

13. Vorrichtung (47) zur Erzeugung von Zuschnitten von Teigstücken (7, 12, 30) mit einer, zumindest im Wesentlichen, dreieckigen und gleichschenkligen Grundform aus einem Teigband (13, 32), **dadurch gekennzeichnet, dass** die Vorrichtung als Stanzvorrichtung dazu ausgebildet ist, über die Breite des Teigbands (13, 32) Teigstücke (7, 12, 30) mit der Grundform in mehreren längsgerichteten Reihen (a, 31) und mit Basisseiten (8, 17, 38), die, bezüglich der mehreren Reihen (a, 31) von Teigstücken (7, 12, 30), symmetrisch und jeweils parallel zu der sich in Längsrichtung des Teigbands (13, 32) erstreckenden Teigbandmittelachse (19, 40b) verlaufen, zuzuschneiden, insbesondere gemäß, einem Verfahren nach einem der vorangehenden Ansprüche.

14. Vorrichtung (47) nach Anspruch 13, **dadurch gekennzeichnet, dass** die Vorrichtung (47) als Stanz- und Querspreizvorrichtung (23) ausgebildet ist und/oder mit einer ortsfest in einem Maschinenrahmen montierten oder montierbaren Führungsbahnplatte (48) ausgebildet ist, die, insbesondere zumindest im Wesentlichen in Längsrichtung des Teigbands (13, 32) und/oder mit sich in Längsrichtung der Teigbands (1-3, 32) verändernden Abstand verlaufende, Führungsbahnen (49) für Stanzformen (51), insbesondere mit Schneiden (c, d) und/oder Pickern (e, f), zur geeigneten Positionierung der Teigstücke (7, 12, 30) aufweist, insbesondere zur Positionierung mit einem bestimmten Abstand.

15. Vorrichtung (47) nach einem der Ansprüche 13 oder 14, **dadurch gekennzeichnet, dass** die Vorrichtung (47) eine Führungseinrichtung (50) aufweist, auf der einzelne Stanzformen (51), insbesondere mit Schneiden (c, d) und/oder Pickern (e, f), der Stanzvorrichtung quer, insbesondere zumindest im Wesentlichen senkrecht, zur Längsrichtung des Teigbands (13, 32) bewegbar sind.

## Claims

1. A method for producing blanks from pieces of dough (7,12, 30) with an at least substantially triangular and equal-sided basic form from a strip of dough (13, 32), **characterised in that** over the width of the strip of dough (13, 32) pieces of dough (7, 12, 30) with the basic form are cut to size in a number of lengthwise rows (a, 31) and with base sides (8, 17, 38) which run symmetrically in relation to the number of rows (a, 31) of pieces of dough (7, 12, 30) and respectively parallel to the centre axis (19, 40b) of the strip of dough (13, 32) extending in the longitudinal direction of the strip of dough (13, 32).

2. The method according to Claim 1, **characterised in that** within the framework of the method, after being cut to shape the pieces of dough (7, 12, 30) are positioned suitably for further processing.

3. The method according to Claim 2, **characterised in that** within the framework of the positioning transversely and/or obliquely to the longitudinal direction of the strip of dough (13, 32), the pieces of dough (7, 12, 30) are spread and/or rotated into a desired position and/or are spread in the longitudinal direction of the strip of dough (13, 32), in particular in a sequence in which the transverse spreading takes place first of all.

4. The method according to Claim 3, **characterised in that** within the framework of positioning the pieces of dough (7, 12, 30) are respectively spread on at least one separate conveyor belt device, initially transversely and/or obliquely to the longitudinal direction of the strip of dough (13, 32) and are then rotated into a desired position and/or are spread in the longitudinal direction of the strip of dough (13, 32).

5. The method according to any of the preceding claims, **characterised in that** the pieces of dough (7, 12, 30) are cut to size using an apparatus that, as a stamping and transversely spreading apparatus (23), in particular with blades (c, d) and/or pickers (e, f), pulls at least one piece of dough (7, 12, 30) of at least one lengthwise row (a, 31), after cutting to size transversely to the longitudinal direction of the strip of dough (13, 32) of at least one piece of dough (7, 12, 30) of another lengthwise row (a, 31), outwards or obliquely outwards in relation to the centre axis of the strip of dough.

6. The method according to Claim 5, **characterised in that** the stamping and transversely spreading apparatus (23) respectively pulls two pieces of dough (7, 12, 30) of a lengthwise row (a, 31) that lie against one another with two triangle side pieces such that the tip (18, 40a) of the rear triangle in the longitudinal direction of the strip of dough (13, 32) corresponding to a direction of conveyance points outwards, or a number of pieces of dough (7, 12, 30) that is a whole number multiple of two, outwards or obliquely outwards, and/or that the pieces of dough (7, 12, 30) of a lengthwise row (a, 31) are laid against one another again after pulling away outwards or obliquely outwards in the longitudinal direction of the strip of dough (13, 32).

7. The method according to any of the preceding claims, **characterised in that** pieces of dough (7, 12, 30) of a lengthwise row (a, 31) are pulled apart from one another by means of a rotationally or longitudinally spreading apparatus (24), in particular with pickers, in the longitudinal direction of the strip of dough (13, 32), and are rotated forwards with their respective base side (8, 17, 38) in relation to the longitudinal direction corresponding to a direction of conveyance of the strip of dough (13, 32), in particular such that the rotation is started as soon as the pieces of dough (7, 12, 30) have been pulled apart somewhat in the longitudinal direction and/or has ended before a final position of the pieces of dough (7, 12, 30) in the longitudinal direction is reached.

8. The method according to either of Claims 6 or 7, **characterised in that** two pieces of dough (7, 12, 30) of a lengthwise row (a, 31) that rest against one another with two triangle sides (10, 16, 39) such that the tip of the rear triangle in the longitudinal direction of the strip of dough (13, 32) corresponding to a direction of conveyance points outwards, are pulled apart from one another by means of a rotationally and longitudinally spreading apparatus (24) in the longitudinal direction of the strip of dough (13, 32) and are rotated forwards with their respective base side (8, 17, 38), in particular such that the rotation is started as soon as the pieces of dough (7, 12, 30) are pulled apart somewhat in the longitudinal direction and/or is ended before a final position of the pieces of dough (7, 12, 30) in the longitudinal direction is reached.

9. The method according to any of the preceding claims, **characterised in that** the pieces of dough (7, 12, 30) with the basic form are cut to size from the strip of dough (13, 32) without any loss.

10. The method according to any of the preceding claims, **characterised in that** within the framework of the method a stamping and transversely spreading apparatus (23) and a rotationally and longitudinally spreading apparatus (24) are operated and/or controlled synchronised with one another.

11. The method according to Claim 10, **characterised in that** the stamping and transversely spreading apparatus (23) and the rotationally and longitudinally spreading apparatus (24) are controlled by means of a master/slave control system, in particular such that the operation of the rotationally and longitudinally spreading apparatus (24) is controlled as a slave, preferably by means of an electronic shaft, and the stamping and transversely spreading apparatus (23) is controlled as a master.

12. The method according to either of Claims 10 or 11, **characterised in that** within the framework of control of the stamping and transversely spreading apparatus (23) and of the rotationally and longitudinally spreading apparatus (24) a comparison is made between at least one target and actual state for the punching and transversely spreading apparatus (23) and/or for the rotationally and longitudinally spreading apparatus (24).

13. An apparatus (47) for producing blanks from pieces of dough (7, 12, 30) with an at least substantially triangular and equal-sided basic form from a strip of dough (13, 32), **characterised in that** the apparatus, as a stamping apparatus, is designed to cut to size over the width of the strip of dough (13, 32) pieces of dough (7, 12, 30) with the basic form in a number of lengthwise rows (a, 31) and with base sides (8, 17, 38) which run symmetrically in relation to the number of rows (a, 31) of pieces of dough (7, 12, 30) and respectively parallel to the centre axis (19, 40b) of the strip of dough extending in the longitudinal direction of the strip of dough (13, 32), in particular according to a method according to any of the preceding claims.

14. The apparatus (47) according to Claim 13, **characterised in that** the apparatus (47) is designed as a stamping and transversely spreading apparatus (23) and/or is designed with a guide track plate (48) mounted or that can be mounted fixedly in a machine frame that has guide tracks (49) for stamp shaping (51), in particular at least substantially in the longitudinal direction of the strip of dough (13, 32) and/or with spacing that changes in the longitudinal direction of the strip of dough (13, 32), in particular with blades (c, d) and/or pickers (e, f) for the appropriate positioning of the pieces of dough (7, 12, 30), in particular for positioning with specific spacing.

15. The apparatus (47) according to any of Claims 13 or 14, **characterised in that** the apparatus (47) has a guide device (50) on which individual stamping dies (51), in particular with blades (c, d) and/or pickers (e, f), of the stamping apparatus can be moved transversely, in particular at least substantially transversely to the longitudinal direction of the strip of dough (13, 32).

## Revendications

1. Procédé de production de morceaux de pâte (7, 12, 30) pourvus d'une forme de base au moins essentiellement triangulaire et isocèle à partir d'une bande de pâte (13, 32), **caractérisé en ce que** des morceaux de pâte (7, 12, 30) pourvus de la forme de base sont découpés, sur la largeur de la bande de pâte (13, 32), en plusieurs rangs longitudinaux (a, 31) et avec des côtés de base (8, 17, 38) qui, par rapport auxdits plusieurs rangs (a, 31) de morceaux de pâte (7, 12, 30), s'étendent de manière symétrique et, chacun, parallèlement à l'axe central (19, 40b) de la bande de pâte s'étendant dans la direction longitudinale de la bande de pâte (13, 32).

2. Procédé selon la revendication 1, **caractérisé en ce que**, dans le cadre du procédé, les morceaux de pâte (7, 12, 30) sont repositionnés de manière appropriée après la découpe pour un traitement suivant.

3. Procédé selon la revendication 2, **caractérisé en ce que**, dans le cadre du repositionnement, les morceaux de pâte (7, 12, 30) sont écartés et/ou tournés dans une position souhaitée de manière transversale et/ou oblique par rapport à la direction longitudinale de la bande de pâte (13, 32) et/ou sont écartés dans la direction longitudinale de la bande de pâte (13, 32), notamment dans une suite selon laquelle l'écartement transversal est effectué en premier.

4. Procédé selon la revendication 3, **caractérisé en ce que**, dans le cadre du repositionnement, respectivement sur au moins un dispositif à bande de transport individuel, les morceaux de pâte (7, 12, 30) sont d'abord écartés et/ou tournés dans une position souhaitée de manière transversale et/ou oblique par rapport à la direction longitudinale de la bande de pâte (13, 32) et/ou sont ensuite tournés dans une position souhaitée et/ou écartés dans la direction longitudinale de la bande de pâte (13, 32).

5. Procédé selon l'une des revendications précédentes, **caractérisé en ce que** les morceaux de pâte (7, 12, 30) sont découpés à l'aide d'un dispositif qui, comme dispositif d'emboutissage et d'écartement transversal (23), notamment à l'aide de tranchants (c, d) et/ou de pointes (e, f), tire, après la découpe, au moins un morceau de pâte (7, 12, 30) d'au moins un rang longitudinal (a, 31) de manière transversale par rapport à la direction longitudinale de la bande de pâte (13, 32) en éloignement d'un morceau de pâte (7, 12, 30) d'un autre rang longitudinal (a, 31) vers l'extérieur ou de manière oblique vers l'extérieur par rapport à l'axe central de la bande de pâte.

6. Procédé selon la revendication 5, **caractérisé en ce que** le dispositif d'emboutissage et d'écartement transversal (23) tire chaque fois deux morceaux de pâte (7, 12, 30) d'un rang longitudinal (a, 31) qui sont disposés de manière adjacente par deux côtés de triangle d'une manière telle que la pointe (18, 40a) du triangle arrière, vu dans la direction longitudinale de la bande de pâte (13, 32) correspondant à une direction de transport, soit orientée vers l'extérieur, ou un nombre de morceaux de pâte (7, 12, 30) qui est un multiple entier de deux, vers l'extérieur ou de manière oblique vers l'extérieur et/ou **en ce que** les morceaux de pâte (7, 12, 30) d'un rang longitudinal (a, 31), après avoir été tirés vers l'extérieur ou de manière oblique vers l'extérieur, sont disposés de nouveau de manière adjacente dans la direction longitudinale de la bande de pâte (13, 32).

7. Procédé selon l'une des revendications précédentes, **caractérisé en ce que** des morceaux de pâte (7, 12, 30) d'un rang longitudinal (a, 31) sont tirés en éloignement à l'aide d'un dispositif de rotation et d'écartement longitudinal (24), notamment à l'aide de pointes, dans la direction longitudinale de la bande de pâte (13, 32) et sont tournés avec leur côté de base (8, 17, 38) respectif vers l'avant par rapport à la direction longitudinale correspondant à une direction de transport de la bande de pâte (13, 32), notamment de façon que la rotation soit commencée dès que les morceaux de pâte (7, 12, 30) sont écartés un peu dans la direction longitudinale et/ou qu'elle soit terminée avant qu'une position définitive des morceaux de pâte (7, 12, 30) soit atteinte dans la direction longitudinale.

8. Procédé selon l'une des revendications 6 ou 7, **caractérisé en ce que** deux morceaux de pâte (7, 12, 30) d'un rang longitudinal (a, 31) qui sont disposés de manière adjacente par deux côtés de triangle (10, 16, 39) d'une manière telle que la pointe du triangle arrière, vu dans la direction longitudinale de la bande de pâte (13, 32) correspondant à une direction de transport, soit orientée vers l'extérieur, sont tirés en éloignement à l'aide d'un dispositif de rotation et d'écartement longitudinal (24) dans la direction longitudinale de la bande de pâte (13, 32) et sont tournés avec leur côté de base (8, 17, 38) respectif vers l'avant, notamment de façon que la rotation soit commencée dès que les morceaux de pâte (7, 12, 30) sont écartés un peu dans la direction longitudinale et/ou qu'elle soit terminée avant qu'une position définitive des morceaux de pâte (7, 12, 30) soit atteinte dans la direction longitudinale.

9. Procédé selon l'une des revendications précédentes, **caractérisé en ce que** les morceaux de pâte (7, 12, 30) pourvus de la forme de base sont découpés sans pertes de la bande de pâte (13, 32).

10. Procédé selon l'une des revendications précédentes, **caractérisé en ce que**, dans le cadre du procédé, un dispositif d'emboutissage et d'écartement transversal (23) et un dispositif de rotation et d'écartement longitudinal (24) sont faits fonctionner et/ou commandés de manière adaptée l'une à l'autre.

11. Procédé selon la revendication 10, **caractérisé en ce que** le dispositif d'emboutissage et d'écartement transversal (23) et le dispositif de rotation et d'écartement longitudinal (24) sont commandés à l'aide d'une commande de type maître/esclave, notamment de façon que le fonctionnement du dispositif de rotation et d'écartement longitudinal (24) soit commandé comme esclave, de préférence via une onde électronique, et du côté du dispositif d'emboutissage et d'écartement transversal (23) comme maître.

12. Procédé selon l'une des revendications 10 ou 11, **caractérisé en ce que**, dans le cadre d'une commande du dispositif d'emboutissage et d'écartement transversal (23) et du dispositif de rotation et d'écartement longitudinal (24), est effectuée une comparaison d'au moins un état de consigne et réel pour le dispositif d'emboutissage et d'écartement transversal (23) et/ou le dispositif de rotation et d'écartement longitudinal (24).

13. Dispositif (47) pour la production de morceaux de pâte (7, 12, 30) pourvus d'une forme au moins essentiellement triangulaire et isocèle à partir d'une bande de pâte (13, 32), **caractérisé en ce que** le dispositif est configuré comme dispositif d'emboutissage afin de découper, sur la largeur de la bande de pâte (13, 32), des morceaux de pâte (7, 12, 30) pourvus de la forme de base, en plusieurs rangs longitudinaux (a, 31) et avec des côtés de base (8, 17, 38) qui, par rapport auxdits plusieurs rangs (a, 31) de morceaux de pâte (7, 12, 30), s'étendent de manière symétrique et, chacun, parallèlement à l'axe central (19, 40b) de la bande de pâte s'étendant dans la direction longitudinale de la bande de pâte (13, 32), notamment selon un procédé selon l'une des revendications précédentes.

14. Dispositif (47) selon la revendication 13, **caractérisé en ce que** le dispositif (47) est configuré comme dispositif d'emboutissage et d'écartement transversal (23) et/ou est conformé avec une plaque de voies de guidage (48) montée ou susceptible d'être montée de manière stationnaire dans un châssis de machine, qui comprend des voies de guidage (49) pour des moules d'emboutissage (51), notamment avec des tranchants (c, d) et/ou des pointes (e, f), s'étendant au moins essentiellement dans la direction longitudinale de la bande de pâte (13, 32) et/ou avec une distance variant le long de la direction longitudinale de la bande de pâte (13, 32), pour un positionnement approprié des morceaux de pâte (7, 12, 30), notamment pour un positionnement avec une distance déterminée.

15. Dispositif (47) selon l'une des revendications 13 ou 14, **caractérisé en ce que** le dispositif (47) comprend un dispositif de guidage (50) sur lequel des moules d'emboutissage (51) du dispositif d'emboutissage, notamment avec des tranchants (c, d) et/ou des pointes (e, f), sont aptes à être déplacés transversalement, notamment au moins essentiellement perpendiculaire, à la direction longitudinale de la bande de pâte (13, 32).
